# EUROPÄISCHE PATENTANMELDUNG

(11) **EP 1 046 796 A2**
(43) Veröffentlichungstag der Anmeldung: **25.10.2000**
(21) Anmeldenummer: 00107362.6
(22) Anmeldetag: 05.04.2000
(51) Int. Cl.: F01N 3/22

(54) **Vorrichtung zur Zuführung von Zusatzluft zum Abgasstrom einer Brennkraftmaschine**

(30) Priorität: 23.04.1999 DE 19918470
(71) Anmelder: Bayerische Motoren Werke Aktiengesellschaft, 80809 München (DE)
(72) Erfinder: Egger, Stefan, 86916 Kaufering (DE); Kraft, Klaus, 85051 Ingolstadt (DE)

(57) **Zusammenfassung**

Die Erfindung betrifft eine Vorrichtung zur Zuführung von Zusatzluft zum Abgasstrom einer Brennkraftmaschine mit einer Luftpumpe sowie mit einem stromab dieser vorgesehenen Sekundärluft-Ventil, dessen Eingang mit der Förderseite der Luftpumpe und dessen Ausgang mit der Abgasanlage der Brennkraftmaschine verbunden ist, wobei der insbesondere tellerförmige Ventilkörper des Sekundärluftventiles durch ein Federelement in seiner geschlossenen Position gehalten wird und mittels einer in einer Ventil-Steuerkammer angeordneten Membran durch Beaufschlagen einer Seite dieser Membran mit von der Luftpumpe bereitgestelltem Überdruck geöffnet wird. Erfindungsgemäß ist die andere Seite der Membran mit Unterdruck beaufschlagbar, der unter Anwendung des Saugstrahlpumpen-Prinzips in der von der Luftpumpe zum Eingang des Sekundärluft-Ventiles führenden Verbindungsleitung erzeugt wird. Bevorzugt ist hierzu in der von der Luftpumpe zum Eingang des Sekundärluft-Ventiles führenden Verbindungsleitung ein Venturi-Rohrabschnitt vorgesehen, von dessen engstem Querschnitt eine Unterdruckleitung in eine Federkammer des Sekundärluftventiles führt, welche von der Membran mit ihrer mit Unterdruck zu beaufschlagenden Seite begrenzt ist.

## Beschreibung

Die Erfindung betrifft eine Vorrichtung zur Zuführung von Zusatzluft zum Abgasstrom einer Brennkraftmaschine mit einer Luftpumpe sowie mit einem stromab dieser vorgesehenen Sekundärluftventil, dessen Eingang mit der Förderseite der Luftpumpe und dessen Ausgang mit der Abgasanlage der Brennkraftmaschine verbunden ist, wobei der insbesondere tellerförmige Ventilkörper des Sekundärluftventiles durch ein Federelement in seiner geschlossenen Position gehalten wird und mittels einer in einer Ventil-Steuerkammer angeordneten Membran durch Beaufschlagen einer Seite dieser Membran mit von der Luftpumpe bereitgestelltem Überdruck geöffnet wird. Eine Vorrichtung mit einem derartigen Sekundärluftventil bildet zumindest internen Stand der Technik, daneben wird zum technischen Umfeld auf die DE 43 26 340 A1 verwiesen.

Ein im Oberbegriff des Anspruchs 1 angegebenes Sekundärluftventil dient dazu, die Zuführung eines von einer Luftpumpe bzw. Sekundärluftpumpe geförderten Frischluftstromes zum Abgasstrom einer Brennkraftmaschine zu steuern bzw. in denjenigen Betriebszuständen, in denen keine Beimengung von Frischluft zum Brennkraftmaschinen-Abgasstrom erfolgen soll, ein quasi Zurück-Strömen von Brennkraftmaschinen-Abgas zur Luftpumpe hin zu verhindern. Bislang wurde der Ventilkörper des Sekundärluftventiles unter Zuhilfenahme des von der Brennkraftmaschine erzeugten bzw. bei Teillastbetrieb einer quantitätsgesteuerten Brennkraftmaschine in deren Sauganlage vorliegenden Unterdruckes betätigt. Dabei wird der Ventilkörper durch ein Federelement in seiner geschlossenen Position gehalten und durch Beaufschlagen einer im Sekundärluftventil vorgesehenen Steuerkammer, welche von einer auf den Ventilkörper einwirkenden Membran begrenzt wird, mit Unterdruck geöffnet. Dieser bekannte Stand der Technik ist in der eingangs genannten DE 43 26 340 A1 gezeigt.

Künftige quantitätsgesteuerte Brennkraftmaschinen werden jedoch aufgrund neuartiger Quantitäts-Steuerungskonzepte nahezu keinen Unterdruck erzeugen, so daß auch kein Unterdruck zum Öffnen des Sekundärluftventiles zur Verfügung steht. Naheliegend ist es daher, den von der Sekundärluftpumpe bereitgestellten Überdruck zum Öffnen des Ventilkörpers des Sekundärluftventiles heranzuziehen. Hierzu muß eigentlich nur die andere Seite der o.g. Membran mit Überdruck beaufschlagt werden, d.h. wurde vorher bspw. die Unterseite der mit dem Ventilkörper verbundenen Membran mit Unterdruck beaufschlagt, um den Ventilkörper in seine Offenposition zu bewegen, so kann nunmehr an die Oberseite der Membran zum Erreichen des gleichen Zweckes Überdruck angelegt werden.

Das den Ventilkörper in seiner geschlossenen Position haltende Federelement muß eine gewisse Mindestfederkraft entwickeln, um sicherzustellen, daß der Ventilkörper auch bei den in der Brennkraftmaschinen-Abgasanlage üblicherweise auftretenden Druckpulsationen - aufgrund dieser kann in der Abgasanlage zeitlich und örtlich beschränkt nämlich Unterdruck auftreten - nicht selbsttätig geöffnet wird. Die Federkraft muß also ausreichend hoch sein, damit das Sekundärluftventil bei nicht angelegtem Steuerdruck - (dieser dient dem Öffnen des Sekundärluftventiles) - trotz des Auftretens von Unterdruckspitzen in der Abgasanlage geschlossen bleibt.

Nun hat sich gezeigt, daß bei vernünftiger Dimensionierung der Sekundärluftpumpe sowie des Sekundärluftventiles der von der Sekundärluftpumpe bereitgestellte Überdruck nicht ausreichend hoch ist, um den Ventilkörper gegen die Federkraft des entsprechend den im letzten Absatz beschriebenen Anforderungen ausgelegten Federelementes öffnen zu können. Zwar könnte die Pumpenleistung der Sekundärluftpumpe entsprechend erhöht und/oder die Fläche der den Ventilkörper betätigenden Membran entsprechend vergrößert werden, jedoch sprechen gegen die Umsetzung dieser Maßnahmen andere Argumente.

Aufgabe der vorliegenden Erfindung ist es daher, einfache Maßnahmen aufzuzeigen, mit Hilfe derer bei einer Vorrichtung nach dem Oberbegriff des Anspruchs 1 der Ventilkörper des Sekundärluftventiles auch mit einem betragsmäßig relativ niedrigen Überdruck zuverlässig und schnell geöffnet werden kann.
Die Lösung dieser Aufgabe ist dadurch gekennzeichnet, daß die andere Seite der Membran (des Sekundärluftventiles) mit Unterdruck beaufschlagbar ist, der unter Anwendung des Saugstrahlpumpen-Prinzips in der von der Luftpumpe zum Eingang des Sekundärluftventiles führenden Verbindungsleitung erzeugt wird. Bevorzugt ist hierzu in der von der Luftpumpe zum Eingang des Sekundärluftventiles führenden Verbindungsleitung ein Venturi-Rohrabschnitt vorgesehen, von dessen engstem Querschnitt eine Unterdruckleitung in eine Federkammer des Sekundärluftventiles führt, welche von der Membran mit ihrer mit Unterdruck zu beaufschlagenden Seite begrenzt ist.

Erfindungsgemäß wird somit der Ventilkörper des Sekundärluftventiles nicht alleine durch Anlegen von Überdruck an die Membran in seine Offenposition bewegt, sondern zur Unterstützung wird zusätzlich Unterdruck an die andere Seite der Membran angelegt, so daß diese Membran durch Krafteinwirkung auf ihre beiden Seiten im Ventil-Öffnungssinne bewegt wird, womit die durch die Addition von Überdruck und Unterdruck erzeugte Kraft wieder ausreichend hoch ist, um den Ventilkörper sicher und schnell gegen die Kraft des besagten Federelementes zu öffnen.
Erfindungsgemäß wird der besagte Unterdruck ebenso wie der Überdruck quasi von der Sekundärluftpumpe bereitgestellt, d.h. es sind keine aufwendigen Zusatzmaßnahmen zur Erzeugung des benötigten Unterdruckes erforderlich, wenn - wie angegeben - dieser Unterdruck unter Anwendung des Saugstrahlpumpen-Prinzips in der von der Luftpumpe zum Eingang des Sekundärluftventiles führenden Verbindungsleitung erzeugt wird.

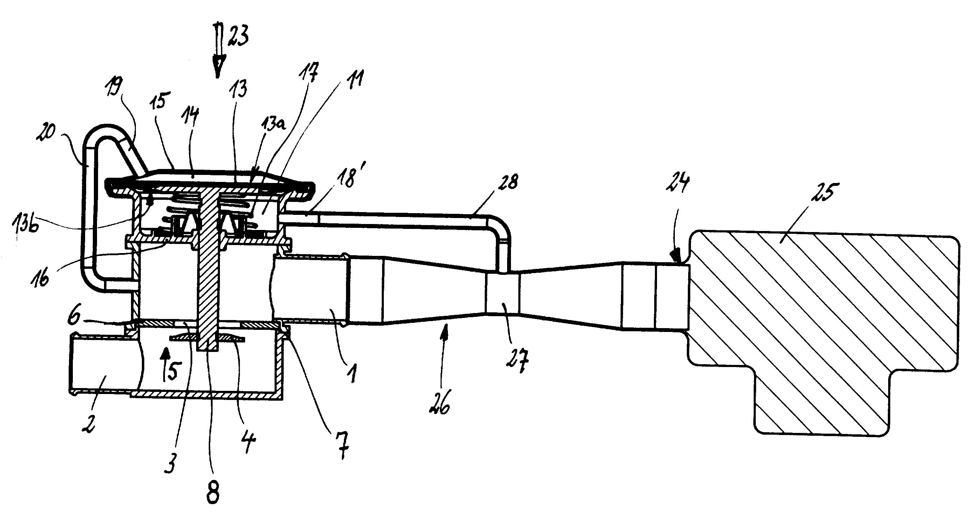

Dies sowie weitere ggf. erfindungswesentliche Merkmale wird auch aus der folgenden Beschreibung eines bevorzugten Ausführungsbeispieles klar ersichtlich. In der beigefügten einzigen Figur ist dabei eine erfindungsgemäße Vorrichtung in einer Prinzipdarstellung sowie ein entsprechendes Sekundärluftventil im Schnitt gezeigt.

Mit der Bezugsziffer 23 ist (in seiner Gesamtheit) ein Sekundärluftventil bezeichnet, dessen Eingang 1 über eine Verbindungsleitung 26 mit der Förderseite 24 einer lediglich abstrahiert dargestellten Luftpumpe 25 (= Sekundärluftpumpe 25) verbunden ist. Der Ausgang 2 des Sekundärluftventiles 23 ist mit der (figürlich nicht dargestellten) Abgasanlage einer Brennkraftmaschine verbunden. Im Innenraum des Sekundärluftventiles 23 ist ein Übertritt 3 vorgesehen, über den eine Verbindung zwischen dem Eingang 1 und dem Ausgang 2 hergestellt werden kann, wenn ein den Übertritt 3 steuernder Ventilkörper 4 geöffnet wird. In seiner figürlich dargestellten Position gibt dieser Ventilkörper 4 den Übertritt 3 zumindest teilweise frei, so daß ein von der Sekundärluftpumpe 25 geförderter Frischluftstrom vom Eingang 1 durch den Übertritt 3 hindurch zum Ausgang 2 des Sekundärluftventiles 23 und von diesem aus in die Abgasanlage der Brennkraftmaschine gelangen kann. Wird hingegen der tellerförmige Ventilkörper 4 ausgehend von seiner dargestellten Position gemäß Pfeilrichtung 5 nach oben bewegt, so daß er mit seinem Randabschnitt an der den Übertritt 3 enthaltenden Innen-Trennwand 6 des Sekundärluftventiles anliegt, so ist der Übertritt 3 verschlossen und demzufolge die Verbindung zwischen dem Eingang 1 und dem Ausgang 2 unterbrochen. Im letztgenannten Zustand kann weder ein von der Sekundärluftpumpe 25 geförderter Luftstrom in die Abgasanlage der Brennkraftmaschine gelangen, noch kann aus dieser Abgasanlage ein Teil des Brennkraftmaschinen-Abgasstromes zur abgeschalteten (und somit keinen Gegendruck bereitstellenden) Luftpumpe 25 gelangen, so daß diese durch das heiße Abgas nicht geschädigt werden kann.

Wie bereits erwähnt ist der Ventilkörper 4 in bzw. gegen Pfeilrichtung 5 verschiebbar. Hierzu wird der Ventilkörper 4 von einer im Gehäuse 7 des Sekundärluftventiles 23 ebenfalls gemäß Pfeilrichtung 5 längsverschiebbar geführten Betätigungsstange 8 getragen, deren dem Ventilkörper 4 abgewandtes Ende mit einer Membran 13 verbunden ist. Diese Membran 13 begrenzt zum einen eine sog. Ventil-Steuerkammer 14, die unterhalb eines Deckelteiles 15 des Sekundärluftventiles 23 vorgesehen ist. Zwischen diesem Deckelteil 15 sowie dem Gehäuse 7 ist die Membran 13 im übrigen randseitig eingespannt. Zum anderen begrenzt diese Membran 13 eine zur der Ventil-Steuerkammer 14 abgewandten Seite hin liegende Federkammer 11.

In dieser Federkammer 11, die (hier) nach unten bzw. zum Eingang 1 hin von einer einen Bestandteil des Gehäuses 7 bildenden Bodenplatte 16 begrenzt wird, ist ein als Druck-Schraubenfeder ausgebildetes Federelement 17 angeordnet. Dieses zwischen der Bodenplatte 16 und der Membran 13 eingespannte Federelement 17 ist derart ausgelegt, daß es die Membran 13 und somit den Ventilkörper 4 gemäß Pfeilrichtung 5 (nach oben) zu verschieben trachtet. Somit wird dieser Ventilkörper 4 durch das besagte Federelement 17 in seiner geschlossenen Position gehalten.

Initiiert werden kann eine Verschiebung bzw. eine Öffnungsbewegung des Ventilkörpers 4 ausgehend von seiner geschlossenen Position entgegen Pfeilrichtung 5 (nach unten) durch Einbringen von Überdruck in die Ventil-Steuerkammer 14, d.h. durch Anlegen von Überdruck an die hier obere Seite 13a der Membran 13. Um die Ventil-Steuerkammer 14 mit Überdruck beaufschlagen zu können, ist im Deckelteil 15 ein Eintrittsstutzen 19 vorgesehen, der über eine Steuerleitung 20 mit dem Eingang 1 des Sekundärluftventiles 23 verbunden ist. Wird somit die Sekundärluftpumpe 25 in Betrieb genommen, so liegt im Eingang 1 des Sekundärluftventiles 23 Überdruck vor, der über die Steuerleitung 20 in die Ventil-Steuerkammer 14 weitergeleitet wird.

Dieser in der Steuerkammer 14 aufgebaute Überdruck kann grundsätzlich die Membran 13 gegen Pfeilrichtung 5 nach unten quasi in die Federkammer 11 hinein verschieben und somit auch den Ventilkörper 4 über die Betätigungsstange 8 öffnen. Allerdings reicht für eine gewünschte Öffnungsbewegung der Überdruck bei vertretbarer Dimensionierung der relevanten Bauteile kaum aus, um die vom Federelement 17 erzeugte und einer Öffnungsbewegung entgegengerichtete Schließkraft zu überwinden, insbesondere da - wie vor dieser Beschreibung des bevorzugten Ausführungsbeispieles eingangs erläutert wurde - das Federelement 17 hinsichtlich seiner Kraftentfaltung so auszulegen ist, daß in denjenigen Betriebszuständen, in denen das Sekundärluftventil 23 geschlossen bleiben soll, der Ventilkörper 4 tatsächlich sicher und stets in seiner geschlossenen Position gehalten wird. Bei der Auslegung des Federelmentes 17 ist nämlich zu berücksichtigen, daß Unterdruckspitzen, die bekanntlich in der Abgasanlage einer Brennkraftmaschine aufgrund der dort anzutreffenden Abgaspulsationen auftreten können, nicht von sich aus eine Öffnungsbewegung des Ventilkörpers 4 einleiten dürfen.

Um nun über die Membran 13 eine ausreichend große Öffnungskraft aufbringen zu können, die sicher und schnell die vom Federelement 17 erzeugte Schließkraft überwinden kann, sind die weiteren folgenden Maßnahmen vorgesehen:
Die der (hier oberen) Seite 13a gegenüberliegende (hier untere) Seite 13b der Membran 13 ist mit Unterdruck beaufschlagbar, d.h. in der von der Membran 13 mit ihrer Seite 13b begrenzten Federkammer 11 kann Unterdruck hergestellt werden, und zwar über einen Unterdruckstutzen 18', der mit einer im folgenden noch näher erläuterten Unterdruckquelle, die mit Inbetriebnahme der Sekundärluftpumpe 25 wirksam wird, verbunden ist. Dieser Unterdruck, der zusätzlich zum (hier von oben her) auf die Membran 13 einwirkenden Überdruck in einem die Membran 13 gegen Pfeilrichtung 5 (nach unten) verschiebenden Sinne auf die untere Seite 13b der Membran 13 einwirkt, hat nun zur Folge, daß die aus dem Überdruck sowie aus dem Unterdruck gebildete Summen-Kraft ausreichend hoch ist, um die ihr entgegengerichtete und vom Federelement 17 erzeugte Schließkraft zu überwinden. Mit dieser gegen Pfeilrichtung 5 wirkenden Summen-Kraft (resultierend aus dem an der Membran 13 angreifenden Überdruck und Unterdruck) kann somit der Ventilkörper 4 ausgehend von seiner geschlossenen Position im Öffnungssinne bewegt werden. Lag dieser Ventilkörper 4 also vor dem Beaufschlagen der Ventil-Steuerkammer 14 mit Überdruck und vor dem Beaufschlagen der Federkammer 11 mit Unterdruck an der Innen-Trennwand 6 an (und war somit der Übertritt 3 zunächst geschlossen), so wird er nunmehr nach Inbetriebnahme der Sekundärluftpumpe 25 von dieser Innen-Trennwand 6 abgehoben, womit der Übertritt 3 freigegeben wird.

Im vorangegangenen Absatz wurde bereits angegeben, daß die besagte Unterdruckquelle, mittels derer die Federkammer 11 mit Unterdruck beaufschlagbar ist, mit einer Inbetriebnahme der Sekundärluftpumpe 25 wirksam werden soll. Dies hat den Vorteil, daß keine eigenständigen Steuerventile oder dgl. erforderlich sind, wenn gewährleistet sein soll, daß bei einer Inbetriebnahme der Sekundärluftpumpe 25 gleichzeitig an die Ventil-Steuerkammer 14 Überdruck und an die Federkammer 11 Unterdruck angelegt wird. Im Hinblick hierauf, insbesondere aber auch im Hinblick darauf, daß die besagte Unterdruckquelle möglichst einfach ausgebildet sein soll, wird dieser Unterdruck unter Anwendung des Saugstrahlpumpen-Prinzips in der von der Luftpumpe 25 zum Eingang 1 des Sekundärluftventiles 23 führenden Verbindungsleitung 26 erzeugt.

Wie ersichtlich ist, ist hierfür in dieser Verbindungsleitung 26 ein VenturiRohrabschnitt 27 vorgesehen, von dessen engstem Querschnitt eine Unterdruckleitung 28 zum Unterdruckstutzen 8' und somit in die Federkammer 22 des Sekundärluftventiles 23 führt. Der von der Luftpumpe 25 mit deren Inbetriebnahme geförderte und somit durch die Verbindungsleitung 26 zum Eingang 1 des Sekundärluftventiles 23 strömende Luftstrom erzeugt im Venturi-Rohrabschnitt 27 aufgrund der in diesem erfolgenden Beschleunigung Unterdruck, der dann über die Unterdruckleitung 28 in die Federkammer 11 eingeleitet wird, bzw. aus dieser Federkammer 11 wird über den Unterdruckstutzen 8' sowie über die Unterdruckleitung 28 Luft in den VenturiRohrabschnitt 27 hinein abgesaugt.

Selbstverständlich können eine Vielzahl von Details insbesondere konstruktiver Art durchaus abweichend vom gezeigten Ausführungsbeispiel gestaltet sein, ohne den Inhalt der Patentansprüche zu verlassen. So sind beispielsweise geeignete Dichtungen vorzusehen, die eine ausreichende Abdichtung der Federkammer 11 sicherstellen. Auch kann die Steuerleitung 20 in die Betätigungsstange 8 integriert sein. Stets erhält man jedoch mit den beschriebenen Maßnahmen ein Sekundärluftventil, das mit geringem Aufwand sicher und zuverlässig betrieben werden kann.

### Bezugszeichenliste:

- 1: Eingang
- 2: Ausgang
- 3: Übertritt
- 4: Ventilkörper
- 5: Pfeilrichtung
- 6: Innen-Trennwand
- 7: Gehäuse (des Sekundärluftventiles)
- 8: Betätigungsstange
- 11: Federkammer
- 13: Membran
- 13a: (obere bzw. mit Überdruck beaufschlagbare) Seite von 13
- 13b: (untere bzw. mit Unterdruck beaufschlagbare) Seite von 13
- 14: Ventil-Steuerkammer
- 15: Deckelteil (des Sekundärluftventiles)
- 16: Bodenplatte (von 11)
- 17: Federelement
- 18': Unterdruckstutzen (an 11 für 28)
- 19: Eintrittsstutzen (in 15 für 14)
- 20: Steuerleitung (von 1 zu 19)
- 23: Sekundärluftventil
- 24: Förderseite (von 25)
- 25: Sekundärluftpumpe (=Luftpumpe)
- 26: Verbindungsleitung
- 27: Venturi-Rohrabschnitt
- 28: Unterdruckleitung

## Patentansprüche

1. Vorrichtung zur Zuführung von Zusatzluft zum Abgasstrom einer Brennkraftmaschine mit einer Luftpumpe (25) sowie mit einem stromab dieser vorgesehenen Sekundärluftventil (23), dessen Eingang (1) mit der Förderseite (24) der Luftpumpe (25) und dessen Ausgang (2) mit der Abgasanlage der Brennkraftmaschine verbunden ist, wobei der insbesondere tellerförmige Ventilkörper (4) des Sekundärluftventiles (23) durch ein Federelement (17) in seiner geschlossenen Position gehalten wird und mittels einer in einer Ventil-Steuerkammer (14) angeordneten Membran (13) durch Beaufschlagen einer Seite (13a) dieser Membran (13) mit von der Luftpumpe (25) bereitgestelltem Überdruck geöffnet wird,
dadurch gekennzeichnet, daß die andere Seite (13b) der Membran (13) mit Unterdruck beaufschlagbar ist, der unter Anwendung des Saugstrahlpumpen-Prinzips in der von der Luftpumpe (25) zum Eingang (1) des Sekundärluftventiles (23) führenden Verbindungsleitung (26) erzeugt wird.

2. Vorrichtung nach Anspruch 1,
dadurch gekennzeichnet, daß in der von der Luftpumpe (25) zum Eingang (1) des Sekundärluftventiles (23) führenden Verbindungsleitung (26) ein Venturi-Rohrabschnitt (27) vorgesehen ist, von dessen engstem Querschnitt eine Unterdruckleitung (28) in eine Federkammer (11) des Sekundärluftventiles (23) führt, welche von der Membran (13) mit ihrer mit Unterdruck zu beaufschlagenden Seite (13b) begrenzt ist.
